(19) Europäisches Patentamt
European Patent Office
Office européen des brevets

(11) EP 1 638 695 B1

(12) **EUROPEAN PATENT SPECIFICATION**

(45) Date of publication and mention of the grant of the patent:
**03.01.2007 Bulletin 2007/01**

(21) Application number: **04740426.4**

(22) Date of filing: **29.06.2004**

(51) Int Cl.:
***B05D 1/00*** (2006.01) ***C08L 23/08*** (2006.01)
***C08F 210/02*** (2006.01)

(86) International application number:
**PCT/EP2004/007033**

(87) International publication number:
**WO 2005/002744 (13.01.2005 Gazette 2005/02)**

(54) **EXTRUSION COATING**

EXTRUSIONSBESCHICHTUNG

REVETEMENT PAR EXTRUSION

(84) Designated Contracting States:
**AT BE BG CH CY CZ DE DK EE ES FI FR GB GR HU IE IT LI LU MC NL PL PT RO SE SI SK TR**

(30) Priority: **30.06.2003 GB 0315275**

(43) Date of publication of application:
**29.03.2006 Bulletin 2006/13**

(73) Proprietor: **Borealis Technology Oy**
**06101 Porvoo (FI)**

(72) Inventors:
- **LEHTINEN, Arja**
**FIN-00530 Helsinki (FI)**
- **NUMMILA-PAKARINEN, Auli**
**FIN-06100 Porvoo (FI)**
- **WALTER, Philipp**
**79115 Freiburg (DE)**
- **VAHALA, Martii**
**Fin-37150 Nokia (FI)**

(74) Representative: **Campbell, Neil Boyd et al**
**Frank B. Dehn & Co.**
**St Bride's House**
**10 Salisbury Square**
**London EC4Y 8JD (GB)**

(56) References cited:
**WO-A-01/62847**
**US-A- 5 395 471**
**US-B1- 6 291 590**
**US-B1- 6 388 051**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 638 695 B1

## Description

This invention relates to a process for extrusion coating a substrate with a polyethylene composition as well as to the extruded coated structures themselves. More particularly, the invention concerns the use of certain bimodal single site polyethylenes in extrusion coating.

Low density polyethylene (LDPE), conventionally made in a high pressure radical process, preferably in an autoclave reactor, has been used in extrusion coating for many years. In extrusion coating, the polymer resin is melted and formed into thin hot film, which is normally coated onto a moving, flat substrate such as paper, paperboard, metal foil, or plastic film. The coated substrate then passes between a set of counterrotating rollers, which press the coating onto the substrate to ensure complete contact and adhesion.

Polymers used in extrusion coating need to possess certain properties to make them useful as coatings. For example, the coatings should provide adequate moisture barriers and exhibit good sealing properties; they must also possess the requisite mechanical properties and hot tack. In this regard LDPE's do not possess the ideal mechanical properties required by an extrusion coating since they lack the necessary toughness and abuse resistance. It is known therefore to blend LDPE's with other polymer grades to improve mechanical properties.

Hence LDPE has previously been combined with higher density polyethylenes, e.g. medium or high density polyethylene or linear low density polyethylenes to improve mechanical properties. For example, a small amount of LDPE (5 to 30 wt%) can be added to LLDPE to improve processability in an extrusion coating composition. However, when the content of LDPE increases in the composition, then the beneficial properties of the linear polymer, e.g. environmental stress cracking resistance, barrier properties, sealing properties, are soon diluted or lost. On the other hand if the LDPE content is too low then the blend may not have sufficient processability. The problem with such low LDPE content blends is that whilst they have better processability than an LLDPE alone, they may not be extrudable or drawn down at high take-off rates. There is therefore a trade off between good mechanical properties and good processability.

Linear low density polyethylene (LLDPE) and ultra low density polyethylene (ULDPE) extrusion compositions, conventionally made using Ziegler-Natta catalysis offer improved mechanical properties but again are difficult to process due to lack of extrudability.

There remains a need therefore to devise further polyethylene polymer compositions suitable for extrusion coating which provide both good mechanical and processing properties.

WO01/62847 proposes a solution to this problem by using a bimodal polyethylene composition made using a single site catalyst in a multistage process. The composition can be used as an extrusion coating as such or mixed with minor amounts of LDPE prior to extrusion. The polymer produced is preferably a bimodal ethylene/butene copolymer with butene being used in both loop and gas phase stages of a two stage process.

Whilst the polymers described in WO01/62847 have acceptable seal initiation temperatures and relatively broad sealing windows their hot tack strength is limited. In this regard, it is known that hexene-ethylene copolymers provide superior sealing properties than butene-ethylene copolymers and that an octene-ethylene copolymer provides superior properties to a hexene-ethylene copolymer.

However, the use of higher alpha-olefin comonomers, i.e. $C_6$ or greater alpha-olefins, increases the cost of the polymer product and, generally, the efficiency of comonomer incorporation decreases as the carbon number of the comonomer increases, i.e. hexene is less efficiently incorporated than butene and octene is less efficiently incorporated than hexene, etc. The skilled artisan is reluctant therefore to include higher comonomers.

We have now surprisingly found that by incorporating two different alpha-olefin comonomers a multimodal, e.g. bimodal, polyethylene composition ideal for extrusion coating may be produced which has superior sealing properties and hot tack properties to the polyethylenes produced using either of the comonomers as the sole comonomer.

Thus viewed from one aspect the invention provides an extrusion coated substrate said coating comprising a multimodal polyethylene produced by polymerization catalysed by a single site catalyst and comprising as comonomers to ethylene at least two different $C_{4-12}$ alpha olefins, preferably at least two alpha olefins selected from but-1-ene, hex-1-ene, 4-methyl-pent-1-ene, hept-1-ene, oct-1-ene, and dec-1-ene, particularly but-1-ene and hex-1-ene.

Viewed from another aspect the invention provides the use of a multimodal polyethylene produced by polymerization catalysed by a single site catalyst and comprising as comonomers to ethylene at least two different $C_{4-12}$ alpha olefins, preferably at least two alpha olefins selected from but-1-ene, hex-1-ene, 4-methyl-pent-1-ene, hept-1-ene, oct-1-ene, and dec-1-ene, particularly but-1-ene and hex-1-ene in extrusion coating or for the formation of cast films.

In many cases, the seal which is formed between the surfaces to be sealed is put under load while it is still warm. This means that the hot-tack properties of the polyethylene are crucial to ensure a strong seal is formed even before cooling. All extrusion coatings have a window within which sealing may occur, i.e. in which the extrudate becomes partly molten. Traditionally this sealing window has been rather narrow meaning that temperature control during the heat sealing process is critical. The polymers of the invention allow a broader sealing window so allowing the sealing operation to take place at lower temperature and ensuring that temperature control during heat sealing is less important. By operating at lower temperature there are the benefits that the article to be sealed is not exposed to high temperature

and any other component of the extrusion coating which may not be involved in sealing are also not exposed to high temperature. There are also economic advantages since lower temperatures are of course cheaper to generate and maintain.

The polyethylene of the extrusion coating of the invention is typically a mixture of two or more polyethylenes, e.g. produced by blending or by two-or-more stage polymerization reactions. The constituent polyethylenes may be homopolymers, copolymers, terpolymers or polymers of four or more comonomers; preferably however at least one polymer is a terpolymer or at least two polymers are copolymers, in particular in which one monomer, the major component, is ethylene and one or two comonomers, the minor components, are $C_4$ and/or $C_6$ alpha-olefins.

It is especially preferred that the polymer be prepared in a two or more stage polymerization in which in an earlier stage the lower alpha-olefin comonomer (e.g. but-1-ene) is incorporated and in which in a later stage the higher alpha-olefin comonomer (hex-1-ene) is incorporated. Nonetheless, it is within the scope of the invention to produce the polymer in a two stage polymerization reaction in which an ethylene homopolymer is produced in the first stage and an ethylene terpolymer is produced in the second stage or vice versa or in which an ethylene copolymer with the higher alpha-olefin comonomer is produced in the first stage and an ethylene copolymer with the lower alpha-olefin comonomer is produced in the second stage. Likewise, an ethylene copolymer may be produced in the first stage and an ethylene terpolymer in the second stage and vice versa. It is also possible to employ a prepolymerisation stage as is well known in the art.

In a most preferred embodiment the polyethylene is formed from a mixture of an ethylene/but-1-ene copolymer (lower molecular weight component) preferably made in the slurry phase and an ethylene/hex-1-ene copolymer (higher molecular weight component) preferably made in the gas phase.

The expression "homopolymer" of ethylene used herein refers to a polyethylene that consists substantially, i.e. at least 98% by weight, preferably at least 99% by weight, more preferably at least 99.5% by weight, most preferably at least 99.8% by weight, of ethylene units.

The ethylene polymers of the invention are produced using a so-called single site catalyst, e.g. a catalyst comprising a metal coordinated by one or more η-bonding ligands. Such η-bonded metals are normally referred to as metallocenes and the metals are typically Zr, Hf or Ti, especially Zr or Hf. The η-bonding ligand is typically an $\eta^5$-cyclic ligand, i.e. a homo or heterocyclic cyclopentadienyl group optionally with fused or pendant substituents. Such metallocene catalysts have been widely described in the scientific and patent literature for about twenty years. Such metallocene catalysts are frequently used with catalyst activators or co-catalysts, e.g. alumoxanes such as methylaluminoxane, again as widely described in the literature.

The polymer used in the extrusion coatings of the invention preferably is multimodal, e.g. bimodal, i.e. its molecular weight profile does not comprise a single peak but instead comprises the combination of two or more peaks (which may or may not be distinguishable) centred about different average molecular weights as a result of the fact that the polymer comprises two or more separately produced components. In this embodiment, a higher molecular weight component preferably corresponds to a copolymer (or terpolymer etc.) of the higher alpha-olefin comonomer and a lower molecular weight component preferably corresponds to an ethylene homopolymer or a copolymer (or terpolymer etc.) of the lower alpha-olefin comonomer. Such bimodal ethylene polymers may be prepared for example by two or more stage polymerization or by the use of two or more different polymerization catalysts in a one stage polymerization. Preferably however they are produced in a two-stage polymerization using the same catalyst, e.g. a metallocene catalyst, in particular a slurry polymerization in a loop reactor followed by a gas phase polymerization in a gas phase reactor. A loop reactor - gas phase reactor system has been developed by Borealis A/S, Denmark and is known as BORSTAR® technology.

Preferably, the lower molecular weight polymer fraction is produced in a continuously operating loop reactor where ethylene is polymerized in the presence of a polymerization catalyst as stated above and a chain transfer agent such as hydrogen. The diluent is typically an inert aliphatic hydrocarbon, preferably isobutane or propane. A $C_4$ to $C_{12}$ alpha-olefin comonomer is preferably added to control the density of the lower molecular weight copolymer fraction.

Preferably, the hydrogen concentration is selected so that the lower molecular weight copolymer fraction has the desired melt flow rate. More preferably, the molar ratio of hydrogen to ethylene is between 0.1 and 1.5 mol/kmol, most preferably, between 0.2 and 1.0 mol/kmol.

In the case the target density of the lower molecular weight copolymer fraction exceeds 955 kg/m$^3$, it is advantageous to operate the loop reactor using propane diluent in so called supercritical conditions where the operating temperature exceeds the critical temperature of the reaction mixture and the operating pressure exceeds the critical pressure of the reaction mixture. A preferred range of temperature is then from 90 to 110°C and the range of pressures is from 50 to 80 bar.

The slurry is intermittently or continuously removed from the loop reactor and transferred to a separation unit where at least the chain transfer agents (e.g. hydrogen) are separated from the polymer. The polymer containing the active catalyst is then introduced into a gas phase reactor where the polymerization proceeds in the presence of additional ethylene, comonomer(s) and optionally chain transfer agent to produce the higher molecular weight copolymer fraction.

The polymer is intermittently or continuously withdrawn from the gas phase reactor and the remaining hydrocarbons are separated from the polymer. The polymer collected from the gas phase reactor is the polyethylene composition of the invention.

The conditions in the gas phase reactor are selected so that the ethylene polymer has the desired properties. Preferably, the temperature in the reactor is between 70 and 100°C and the pressure is between 10 to 40 bar. The hydrogen to ethylene molar ratio ranges from preferably 0 to 1 mol/kmol, more preferably 0 to 0.5 mol/kmol and the alpha-olefin comonomer to ethylene molar ratio ranges from preferably 1 to 100 mol/kmol, more preferably 5 to 50 mol/kmol and most preferably 5 to 30 mol/kmol.

The extrusion coating process may be carried out using conventional extrusion coating techniques. Hence, the polymer obtained from the polymerisation process is fed, typically in the form of pellets, optionally containing additives, to an extruding device. From the extruder the polymer melt is passed through a flat die to the substrate to be coated. Due to the distance between the die lip and the nip, the molten plastic is oxidised in the air for a short period, usually leading to an improved adhesion between the coating and the substrate. The coated substrate is cooled on a chill roll, after which it is passed to edge trimmers and wound up. The width of the line may vary between, for example, 500 to 1500 mm, e.g. 800 to 1100 mm, with a line speed of up to 1000 m/min, for instance 300 to 800 m/min. The temperature of the polymer melt is typically between 275 and 330°C.

The multimodal polyethylene composition of the invention can be extruded onto the substrate as a monolayer coating or as one layer in coextrusion. In either of these case it is possible to use the multimodal polyethylene composition as such or to blend the multimodal polyethylene composition with other polymers, especially LDPE so that the blend contains from 0 to 50%, preferably from 10 to 40% and in particular 15 to 35% of LDPE, based on the weight of the final blend. Blending can occur in a post reactor treatment or just prior to the extrusion in the coating process.

In a multilayer extrusion coating, the other layers may comprise any polymer resin having the desired properties and processabiiity. Examples of such polymers include: barrier layer PA (polyamide) and EVA; polar copolymers of ethylene, such as copolymers of ethylene and vinyl alcohol or copolymers of ethylene and an acrylate monomer; adhesive layers, e.g. ionomers, copolymers of ethylene and ethyl acrylate, etc; HDPE for stiffness; polypropylene for improving heat resistance and grease resistance; LDPE resins produced in a highpressure process; LLDPE resins produced by polymerising ethylene and alpha-olefin comonomers in the presence of a Ziegler, chromium or metallocene catalyst; and MDPE resins.

In a preferred embodiment, the polymer is blended with LDPE, said LDPE preferably having a melt index of at least 3 g/10 min, preferably at least 6.5 g/10 min and being designed for extrusion coating. The LDPE may form 15 to 35 wt% of the final blend. The blend may be coated as a monolayer onto the substrate or it may be coextruded with other polymer(s) as is known in the art.

The substrate is preferably a fibre based material such as paper or cardboard. The substrate may also be a film made of, for example, polyester, cellophane, polyamide, polypropylene or oriented polypropylene. Other suitable substrates include aluminium foil.

The coating will typically be 10 to 1000 μm in thickness, especially 20 to 100 μm. The specific thickness will be selected according to the nature of the substrate and its expected subsequent handling conditions. The substrate may be as thick as 10 to 1000 μm, e.g. 6 to 300 μm.

Viewed from a further aspect the invention also provides a polyethylene composition for extrusion coating, said composition comprising a multimodal polyethylene produced by polymerization catalysed by a single site catalyst and having as comonomers to ethylene at least two different $C_{4-12}$ alpha olefins, preferably at least two alpha olefins selected from but-1-ene, hex-1-ene, 4-methyl-pent-1-ene, hept-1-ene, oct-1-ene, and dec-1-ene particularly but-1-ene and hex-1-ene.

Viewed from a further aspect the invention provides a process for extrusion coating a substrate comprising extruding a multimodal polyethylene produced by polymerization catalysed by a single site catalyst and which comprises as comonomers to ethylene at least two different $C_{4-12}$ alpha olefins, preferably at least two alpha olefins selected from but-1-ene, hex-1-ene, 4-methyl-pent-1-ene, hept-1-ene, oct-1-ene, and dec-1-ene particularly but-1-ene and hex-1-ene to form a polymer melt and coating a substrate with said melt.

The extrusion coating of the invention preferably comprises either a bimodal terpolymer comprising

a) a lower molecular weight copolymer of ethylene and but-1-ene

b) a higher molecular weight copolymer of ethylene and a $C_5$ to $C_{12}$ alpha-olefin (e.g. $C_6$ to $C_{12}$ alpha-olefin)

or a bimodal polymer comprising

a) a lower molecular weight polymer which is a binary copolymer of ethylene and a $C_4$ to $C_{12}$ alpha-olefin and

b) a higher molecular weight polymer which is either a binary copolymer of ethylene and but-1-ene, if the lower molecular weight polymer of a) is a binary copolymer of ethylene and a $C_5$ to $C_{12}$ alpha-olefin(e.g. $C_6$ to $C_{12}$ alpha-olefin), or a terpolymer of ethylene, but-1-ene and a $C_5$ to $C_{12}$ alpha-olefin (e.g. $C_6$ to $C_{12}$ alpha-olefin) .

In a preferred embodiment the present invention provides a coating of a bimodal polymer with a relatively narrow molecular weight distribution (MWD) and excellent sealing properties, good processability, low water vapour permeability and a low level of extractibles. The MWD is preferably 2.5 to 10, especially 3.0 to 6.0.

The weight average molecular weight of the multimodal, e.g. bimodal polymer is preferably between 50,000 and 250,000 g/mol. The lower molecular weight polymer fraction preferably has a weight average molecular weight preferably of 5000 to 100,000 g/mol, more preferably of 10,000 to 70,000 g/mol and the higher molecular weight polymer fraction preferably has a weight average molecular weight preferably of 50,000 to 500,000 g/mol, more preferably of 100,000 to 300,000 g/mol.

The molecular weight distribution of the polymer is further characterized by the way of its melt flow rate (MFR) according to ISO 1133 at 190°C. The final multimodal, e.g. bimodal polymer preferably has a melt flow rate $MFR_2$ of 1 to 30 g/10min, more preferably of 5 to 25 g/10min. The lower molecular weight polymer fraction preferably has a melt index $MFR_2$ of 5 to 1000 g/10min, more preferably of 10 to 200 g/10min.

The density of the polymer is preferably 905 to 940 $kg/m^3$, more preferably of 905 to 935 $kg/m^3$. The density of the lower molecular weight polymer fraction is preferably 920 to 950 $kg/m^3$, more preferably 925 to 940 $kg/m^3$. The density of the higher molecular weight component polymer fraction is preferably 880 to 910 $kg/m^3$, more preferably 895 to 905 $kg/m^3$. The lower molecular weight component should have a higher density than the higher molecular weight component.

The sealing initiation temperature can be controlled by adjusting the MFR of the polymer and the density of the lower molecular weight component. Higher MFR leads to lower seal initiation temperature. In a highly preferred embodiment the polymers of the invention give rise to a constant heat sealing force over a wide temperature range. Hence, the heat sealing force is substantially constant, e.g. the sealing force is within 2, preferably within 1 N/25.4mm , over a temperature range of at least 30°C, preferably at least 40°C. These properties are depicted in Figures 1 and 2.

The bimodal polymer according to the present invention preferably comprises 30 to 70%, more preferably 35 to 60% and most preferably 38 to 55% by weight of the lower molecular weight copolymer fraction with regard to the total composition.

The overall comonomer content in the polymer is preferably 0.5 to 10 mol%, preferably 1.5 to 6.5 mol%, more preferably 2 to 5 mol% and in the lower molecular weight polymer the comonomer content is preferably from 0 to 2.0 mol%, preferably 0.5 to 1.5 mol%. In the higher molecular weight polymer the comonomer content is preferably 1.5 to 8 mol%, preferably 3.5 to 6 mol%. Comonomer contents may be measured by NMR.

The melting point of the polymer may be between 100 to 130°C, preferably 110 to 120°C.

Further, the molecular weight of the higher molecular weight copolymer fraction should be such that when the lower molecular weight copolymer fraction has the melt index and density specified above, the final bimodal polymer has the melt index and density as discussed above.

In addition to the polymer itself, the coating of the invention may also contain antioxidants, process stabilizers, pigments and other additives known in the art. Moreover, the multimodal single site catalyst ethylene polymer with two other alpha-olefin comonomers may be blended with other polymers while retaining sealing and mechanical properties suitable for the desired end-uses. Examples of such further polymers which may be used include LDPE, HDPE, MDPE, LLDPE, EMA, EBA, and EVA. Typically, up to about 50% wt of the overall polymer may be constituted by much further polymers, more preferably up to 30% wt in the case of HDPE, MDPE or LLDPE. The multimodal single site catalyst ethylene polymer with two other alpha-olefin comonomers may also be used to produce films on a cast film line.

The present invention will now be illustrated further by the following non-limiting Examples and the accompanying Figures which show the heat sealing properties of various of the examples.

**Experimental:**

Melt flow rate (MFR, sometimes also referred to as melt index) according to ISO 1133, at 190°C. The load used in the measurement is indicated as a subscript, i.e. $MFR_2$ denotes the MFR measured under 2.16 kg load.

Molecular weight averages and molecular weight distribution were determined by size exclusion chromatography (SEC) using Waters Alliance GPCV2000 instrument with on-line viscometer. Oven temperature was 140 °C. Trichlorobenzene was used as a solvent.

Density was determined according to ISO 1183-1987.

But-1-ene and hex-1-ene contents of the polymers were determined by $^{13}C$ NMR.

Basis weight was determined as follows: Five samples were cut off from the extrusion coated paper parallel in the transverse direction of the line. The size of the samples was 10 cm $\times$ 10 cm. The samples were put into a solvent

for 10 - 30 minutes, after which the paper was removed from the plastic and the solvent was allowed to evaporate. The samples were then weighed and the average was calculated. The result was given as a weight of the plastic per square meter.

If the paper substrate had a uniform basis weight, then the measurement could be done without removing the paper. In such a case the basis weight of the paper was subtracted from the measured basis weight. The difference was reported as the result.

Rheology of the polymers was determined using Rheometrics RDA II Dynamic Rheometer. The measurements were carried out at 190°C under nitrogen atmosphere. The measurements gave storage modulus (G') and loss modulus (G'') together with absolute value of complex viscosity (η*) as a function of frequency (ω) or absolute value of complex modulus (G*).

$$\eta^* = \sqrt{(G'^2 + G''^2)}/\omega$$

$$G^* = \sqrt{(G'^2 + G''^2)}$$

According to Cox-Merz rule complex viscosity function, η*(ω) is the same as conventional viscosity function (viscosity as a function of shear rate), if frequency is taken in rad/s. If this empirical equation is valid absolute value of complex modulus corresponds shear stress in conventional (that is steady state) viscosity measurements. This means that function η*(G*) is the same as viscosity as a function of shear stress.

In the present method both viscosity at a low shear stress or η* at a low G* (which serve as an approximation of so called zero viscosity) and zero shear rate viscosity were used as a measure of average molecular weight. On the other hand, shear thinning, that is the decrease of viscosity with G*, gets more pronounced the broader is the molecular weight distribution. This property can be approximated by defining a so-called shear thinning index, SHI, as a ratio of viscosities at two different shear stresses. In the examples below the shear stresses (or G*) 0 and 100 kPa were used. Thus:

$$SHI_{0/100} = \eta^*_0/\eta^*_{100}$$

where

$\eta^*_0$ is the zero shear rate viscosity
$\eta^*_{100}$ is complex viscosity at G* = 100 kPa

As mentioned above storage modulus function, G'(ω), and loss modulus function, G''(ω), were obtained as primary functions from dynamic measurements. The value of the storage modulus at a specific value of loss modulus increases with broadness of molecular weight distribution. However this quantity is highly dependent on the shape of molecular weight distribution of the polymer. In the examples the value of G' at G'' = 5 kPa was used.

Melting temperature and crystallinity was determined by differential scanning calorimetry (DSC) using Mettler Toledo DSC822, with heating and cooling rate of 10°C/min.

**Catalyst Preparation Example 1:**

134 grams of a metallocene complex (bis (n-butyldicyclopentadienyl) hafnium dichloride supplied by Witco as TA02823, containing 0.36 % by weight Hf) and 9.67 kg of a 30% solution of methylalumoxane (MAO) in toluene (supplied by Albemarle) were combined and 3.18 kg dry, purified toluene was added. The thus obtained complex solution was added on 17 kg silica carrier Sylopol 55 SJ by Grace. The complex was fed very slowly with uniform spraying during 2 hours. Temperature was kept below 30°C. The mixture was allowed to react for 3 hours after complex addition at 30°C. The thus obtained solid catalyst was dried by purging it with nitrogen at 50°C for three hours and recovered.

**Catalyst Preparation Example 2:**

Benzylation of $(n\text{-}BuCp)_2HfCl_2$ by using benzyl potassium *Synthesis of benzyl potassium*

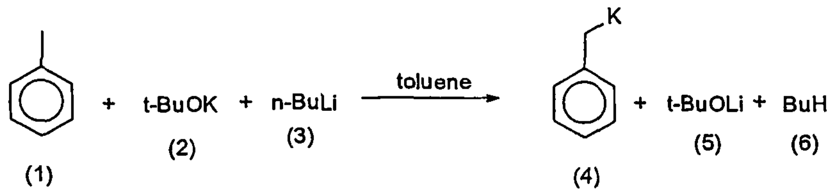


First, 200 mmol of potassium tert-butoxide (Fluka 60100, 97%) was dissolved in 250 ml toluene. Next, 200 mmol of n-butyllithium (~2.5 M solution in hexanes, Aldrich) was added during 1.5 hours. The mixture turned from white into red. The mixture was stirred for 2.5 days. It was then filtrated and washed with toluene (5x100 ml) and pentane (50 ml). As a result 21.7 grams benzylpotassium was obtained as brick red, toluene insoluble solid. Yield was 83%. $^1H$-NMR in THF-$d_8$, $\delta$(ppm): 6.01 (m, 2H), 5.10 (d, 2H), 4.68 (t, 1H), 2.22 (s, 2H). Chemical shifts are referenced to the solvent signal at 3.60 ppm. $^{13}C$-NMR in THF-$d_8$, $\delta$(ppm): 152.3, 129.4, 110.1, 94.3, 51.6. Chemical shifts are referenced to the solvent signal at 66.50 (the middle peak).

Synthesis of $(n\text{-}BuCp)_2Hf(CH_2Ph)_2$

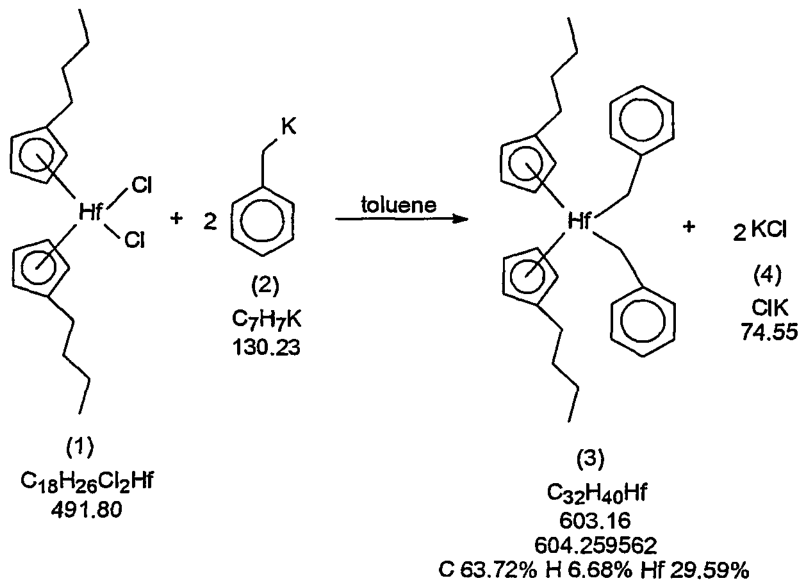


6.87 mmol bis(n-butylcyclopentadienyl)hafnium dichloride and 150 ml of toluene were mixed at 20°C to give brown-grey solution. Then, 14.74 mmol of benzylpotassium prepared as described above was added to the solution at 0°C as a solid during 10 minutes. The cooling bath was removed and the mixture was stirred at 20°C for 3 hours. Solvent was removed under reduced pressure and the remainder was extracted with 3 x 30 ml of pentane. The solvent was removed from the combined pentane solutions giving 3.86 g of $(n\text{-}BuCp)_2Hf(CH_2Ph)_2$ as a yellow liquid. Yield 93%. $^1H$-NMR in toluene-$d_8$, $\delta$ (ppm) : 7.44 (t, 4H), 7.11 (d, 4H), 7.08 (t, 2H), 5.75 (m, 4H), 5.67 (m, 4H), 2.33 (t, 4H), 1.77 (s, 4H), 1.54 (m, 4H), 1.43 (m, 4H), 1.07 (t, 6H). Chemical shifts are referenced to the solvent signal at 2.30 ppm (the middle peak). $^{13}C$-NMR in toluene-$d_8$, $\delta$ (ppm) : 152.7, 137.5, 128, 126.8, 121.6, 112.7, 110.5, 65.3, 34.5, 29.7, 22.8, 14.1. Chemical shifts are referenced to the solvent signal at 20.46 (the middle peak). Elemental analysis[i]: C 63.57% (calc. 63.72), H 6.79% (calc. 6.68), Hf 29.78% (calc. 29.59), K <0.1% (calc. 0).

Catalyst Support and Activation

The metallocene was supported and activated as in Catalyst Preparation Example 1, except that the 134 grams of $(n\text{-}BuCp)_2HfCl_2$ was replaced by 164 grams of $(n\text{-}BuCp)_2Hf(CH_2Ph)_2$ prepared as described above and as the silica carrier SP9-391 (supplied by Grace) was used.

**Example 1:**

A continuously operating loop reactor having a volume of 500 $dm^3$ was operated at 85°C temperature and 60 bar pressure. Into the reactor were introduced propane diluent, ethylene, but-1-ene comonomer, hydrogen and the polymerisation catalyst prepared according to Catalyst Preparation Example 1 in such amounts that the ethylene concentration in the liquid phase of the loop reactor was 7% by mol, the ratio of hydrogen to ethylene was 0.65 mol/kmol, the ratio of but-1-ene to ethylene was 155 mol/kmol and the polymer production rate in the reactor was 25 kg/h. The thus formed polymer had a melt index $MFR_2$ of 100 g/10 min and a density of 935 $kg/m^3$.

The slurry was intermittently withdrawn from the reactor by using a settling leg and directed to a flash tank operated at a temperature of about 50°C and a pressure of about 3 bar.

From the flash tank the powder, containing a small amount of residual hydrocarbons, was transferred into a gas phase reactor operated at 75°C temperature and 20 bar pressure. Into the gas phase reactor were also introduced additional ethylene, hex-1-ene comonomer and nitrogen as inert gas in such amounts that the ethylene concentration in the circulating gas was 22% by mole, the ratio of hydrogen to ethylene was about 0.5 mol/kmol, the ratio of hex-1-ene to ethylene was 12 mol/kmol and the polymer production rate was 26 kg/h. The concentration of but-1-ene was so low that it could not be detected by the on-line gas chromatograph which was used to monitor the gas composition.

The polymer collected from the gas phase reactor was stabilised by adding to the powder 400 ppm Irganox B561. The stabilised polymer was then extruded and pelletised under nitrogen atmosphere with a CIM90P extruder, manufactured by Japan Steel Works. The melt temperature was 200°C, throughput 280 kg/h and the specific energy input (SEI) was 200 kWh/t.

The production split between the loop and gas phase reactors was thus 49/51. The polymer pellets had a melt index $MFR_2$ of 2.7 g/10 min, a density of 920 $kg/m^3$, a but-1-ene content of 2.1% by weight, a content of hex-1-ene of 6.3% by weight, a weight average molecular weight $M_w$ of 90600 g/mol, a number average molecular weight $M_n$ of 16200 g/mol and a z- average molecular weight $M_z$ of 226000 g/mol. Further, the polymer had a zero shear rate viscosity $\eta_0$ of 3630 Pa·s, a shear thinning index $SHI_{0/100}$ of 4.1.

**Example 2:**

The procedure of Example 1 was repeated except that the process conditions were adjusted as shown in Table 1. The polymer properties are shown in Table 2.

**Example 3:**

The procedure of Example 1 was repeated except that the process conditions were adjusted as shown in Table 1. The polymer properties are shown in Table 2.

**Example 4:**

The procedure of Example 1 was repeated except that the process conditions were adjusted as shown in Table 1. The polymer was not pelletised but it was collected as powder. The polymer properties are shown in Table 2.

**Example 5:**

The procedure of Example 4 was repeated except that the process conditions were adjusted as shown in Table 1. Before the powder was pelletised, into the polymer was added 15 %CA8200, which is an LDPE polymer for extrusion coating, manufactured and marketed by Borealis having an $MFR_2$ of 7.5 g/10 min and density 920 $kg/m^3$. The polymer properties shown in Table 2 are determined from the powder.

**Example 6:**

The procedure of Example 1 was repeated except that the catalyst was prepared according to Catalyst Preparation Example 2 and that the process conditions were adjusted as indicated in Table 1. The resulting powder was then

dry blended with 12% of CA8200 and extruded as described in Example 1. The analysis data is given in Table 2. The molecular weights, crystallinity and the comonomer contents were measured from the powder, while the rheological properties were measured from the blend.

**Example 7:**

The procedure of Example 6 was repeated except that the process conditions were adjusted as indicated in Table 1. No LDPE was added to the polymer. The analysis data is given in Table 2.

**Example 8:**

The procedure of Example 6 was repeated except that the process conditions were adjusted as indicated in Table 1. A part of the powder was then recovered and extruded as described in Example 1. No LDPE was added to the polymer. The analysis data is given in Table 2.

**Example 9:**

The procedure of Example 6 was repeated except that the process conditions were adjusted as indicated in Table 1. Further, a part of the resulting powder was recovered and dry blended with 9 % of CA8200 and then extruded as described in Example 6. The analysis data of the blend is given in Table 2.

**Example 10:**

A part of the powder of Example 8 was dry blended with 13% of CA8200 and then extruded as described in Example 6. The analysis data of the blend is given in Table 2.

**Example 11:**

A part of the powder of Example 8 was dry blended with 24% of CA8200 and then extruded as described in Example 6. The analysis data of the blend is given in Table 2.

**Example 12**

The procedure of Example 6 was repeated, except that the temperature in the gas phase reactor was 80 °C, the operating conditions were otherwise as indicated in Table 1 and the amount of LDPE was 10 % by weight. The polymer analysis data is given in Table 2. The molecular weights, crystallinity and the comonomer contents were measured from the powder, while the rheological properties were measured from the blend.

**Example 13:**

The procedure of Example 12 was repeated, except that the operating conditions were as indicated in Table 1 and the amount of LDPE was 25 % by weight. The polymer analysis data is given in Table 2. The molecular weights, crystallinity and the comonomer contents were measured from the powder, while the rheological properties were measured from the blend.

**Example 14:**

The procedure of Example 12 was repeated, except that the operating conditions were as indicated in Table 1 and the amount of LDPE was 30 % by weight. The polymer analysis data is given in Table 2. The molecular weights, crystallinity and the comonomer contents were measured from the powder, while the rheological properties were measured from the blend.

**Table 1: Polymerisation reactor conditions**

| Example | 1 | 2 | 3 | 4 | 5 | 6 | 7 | 8 | 9 |
|---|---|---|---|---|---|---|---|---|---|
| $C_2^=$ loop, mol% | 7 | 7 | 7.2 | 7.2 | 6.5 | 6.0 | 5.3 | 6.7 | 6.8 |
| $H_2/C_2$ loop, mol/kmol | 0.65 | 0.63 | 0.63 | 0.64 | 0.59 | 0.5 | 0.42 | 0.38 | 0.36 |
| $C_4/C_2$ loop, mol/kmol | 155 | 160 | 155 | 160 | 175 | 105 | 200 | 165 | 180 |
| $C_6/C_2$ loop, mol/kmol | 0 | 0 | 0 | 0 | 0 | 0 | 0 | 0 | 0 |
| $MFR_2$ loop, g/10 min | 100 | 100 | 120 | 130 | 100 | 108 | 109 | 39 | 35 |
| Density loop polymer, kg/m$^3$ | 935 | 935 | 936 | 936 | 937 | 938 | 936 | 932 | 931 |
| Productn rate loop, kg/h | 25 | 29 | 30 | 27 | 31 | | | | |
| $C_2^=$ in gpr, mol% | 25 | 23 | 19 | 20 | 21 | 48 | 49 | 53 | 58 |
| $H_2/C_2$ in gpr, mol/kmol | 0.4 | 0.5 | 1.0 | 1.3 | 0.6 | 0.9 | 0.4 | 0.9 | 0.9 |
| $C_4/C_2$ gpr, mol/kmol | * | * | * | * | * | * | * | * | * |
| $C_6/C_2$ gpr, mol/kmol | 12 | 12 | 12 | 13 | 11 | 12 | 10 | 12 | 12 |
| Productn rate in gpr, kg/h | 26 | 30 | 30 | 27 | 31 | | | | |
| Prodctn split, Loop/gpr | 49/51 | 49/51 | 50/50 | 50/50 | 50/50 | 50/50 | 50/50 | 50/50 | 50/50 |

* indicates that the level was too low to be detected by GC

Table 1 cont

| Example | 12 | 13 | 14 |
|---|---|---|---|
| $C_2^=$ in loop, mol-% | 7.3 | 7.2 | 7.5 |
| $H_2/C_2$ in loop, mol/kmol | 0.54 | 0.50 | 0.52 |
| $C_4/C_2$ in loop, mol/kmol | 146 | 156 | 147 |
| $C_6/C_2$ in loop, mol/kmol | 0 | 0 | 0 |
| $MFR_2$ of loop polymer, g/10 min | 140 | 90 | 110 |
| Density of loop polymer, $kg/m^3$ | 934 | 936 | 934 |
| Production rate in loop, kg/h | | | |
| $C_2^=$ in gpr, mol-% | 47 | 33 | 51 |
| $H_2/C_2$ in gpr, mol/kmol | 1.2 | 1.4 | 1.1 |
| $C_4/C_2$ in gpr, mol/kmol | * | * | * |
| $C_6/C_2$ in gpr, mol/kmol | 19 | 17.5 | 14 |
| Production rate in gpr, kg/h | | | |
| Production split, Loop/gpr | 51/49 | 51/49 | 53/47 |

Table 2: Polymer properties

| Example | 1 | 2 | 3 | 4 | 5 | 6 |
|---|---|---|---|---|---|---|
| $MFR_2$, g/10 min | 2.7 | 3.8 | 20 | 9.0 | 14 | 16 |
| Density, kg/m$^3$ | 920 | 916 | 915 | 915 | 915 | 918 |
| $M_z$/1000 | 226 | 197 | 134 | 182 | 143 | N.D. |
| $M_w$/1000 | 90.6 | 84.7 | 59.6 | 78 | 71.7 | N.D. |
| $M_n$/1000 | 16.2 | 20 | 16.9 | 21.7 | 21.7 | N.D. |
| $\eta_0$, Pa·s | 3630 | 2380 | 460 | 1020 | 540 | 732 |
| $SHI_{0/100}$ | 4.1 | 3.7 | 2.7 | 3.5 | 2.9 | 3.9 |
| $\eta_1$, Pa·s | 3430 | 2290 | 440 | 970 | 500 | 660 |
| $SHI_{1/100}$ | 3.9 | 3.5 | 2.6 | 3.3 | 2.7 | 3.5 |
| $G'_{5kPa}$, Pa | 1030 | 950 | 810 | 970 | 850 | 1130 |
| $T_m$, °C | 117.8 | 117.6 | 117.3 | 117.3 | 117.4 | 118 |
| Crystallinity,% | 42.1 | 37.1 | 36.7 | 36.4 | 27.6 | N.D. |
| but-1-ene, wt-% | 2.1 | 2.0 | N.D. | 2.1 | 2.1 | N.D. |
| hex-1-ene, wt-% | 6.3 | 8.3 | N.D. | 9.5 | 8.7 | N.D. |
| LDPE, wt-% | 0 | 0 | 0 | 0 | 15 | 12 |

Table 2 cont

| Example | 7 | 8 | 9 | 10 | 11 | 12 | 13 | 14 |
|---|---|---|---|---|---|---|---|---|
| $MFR_2$, g/10 min | 4.9 | 11 | 11 | 11 | 11 | 8.8 | 13 | 10 |
| Density, kg/m$^3$ | 920 | 918 | 918 | 919 | 919 | 919 | 918 | 920 |
| $M_z$/1000 | N.D. | 140 | N.D. | N.D. | N.D. | 282 | 693 | 1425 |
| $M_w$/1000 | N.D. | 68.7 | N.D. | N.D. | N.D. | 98.5 | 118 | 171 |
| $M_n$/1000 | N.D. | 19.6 | N.D. | N.D. | N.D. | 23.5 | 20.3 | 19 |
| $\eta_0$, Pa·s | 2357 | 785 | 570 | 959 | 816 | 1117 | 840 | 1214 |
| $SHI_{0/100}$ | 4.9 | 2.2 | 2 | 3.1 | 2.7 | 3.6 | 4.4 | 5.9 |
| $\eta_1$, Pa·s | 2120 | 760 | 550 | 870 | 760 | 1030 | 740 | 1000 |
| $SHI_{1/100}$ | 4.5 | 2.2 | 2 | 2.8 | 2.5 | 3.4 | 3.8 | 4.9 |
| $G'_{5kPa}$, Pa | 1260 | 610 | 520 | 930 | 820 | 1020 | 1270 | 1480 |
| $T_m$, °C | N.D. | 116.3 | 115.6 | 115.8 | 115.2 | 115.7 | 116.1 | 115.3 |
| Crystallinity% | N.D. | 37.7 | N.D. | N.D. | N.D. | 37.7 | 38.1 | 38.5 |
| but-1-ene, wt% | N.D. | 2.2 | N.D. | N.D. | N.D. | 2.0 | N.D. | N.D. |
| hex-1-ene, wt% | N.D. | 7.8 | N.D. | N.D. | N.D. | 8.1 | N.D. | N.D. |
| LDPE, wt-% | 0 | 0 | 9 | 13 | 24 | 10 | 25 | 30 |

N.D. indicates that the property was not determined for the respective sample

**Comparative Example 1:**

The polymer manufactured and sold by Dow under trade name Affinity PT1451 was used in the coating experiments.

**Comparative Example 2:**

The polymer manufactured and sold by Borealis under trade name CA8200 was used in the coating experiments. The polymer had $MFR_2$ of 7.5 g/10 min and density of 920 kg/m$^3$.

**Comparative Example 3** (made according to WO 02/02323):

A continuously operating loop reactor having a volume of 500 dm$^3$ was operated at 85°C temperature and 60 bar pressure. Into the reactor were introduced propane diluent, ethylene, but-1-ene comonomer, hydrogen and the polymerisation catalyst prepared according to Catalyst Preparation Example 1 in such amounts that the ethylene concentration in the liquid phase of the loop reactor was 6.6 % by mole, the ratio of hydrogen to ethylene was 0.63 mol/kmol, the ratio of but-1-ene to ethylene was 183 mol/kmol and the polymer production rate in the reactor was 25 kg/h. The thus formed polymer had a melt index $MFR_2$ of 120 g/10 min and a density of 936 kg/m$^3$.

The slurry was intermittently withdrawn from the reactor by using a settling leg and directed to a flash tank operated at a temperature of about 50°C and a pressure of about 3 bar.

From the flash tank the powder, containing a small amount of residual hydrocarbons, was transferred into a gas phase reactor operated at 75 °C temperature and 20 bar pressure. Into the gas phase reactor were also introduced additional ethylene, but-1-ene comonomer and nitrogen as inert gas in such amounts that the ethylene concentration in the circulating gas was 23 % by mole, the ratio of hydrogen to ethylene was about 1.2 mol/kmol, the ratio of but-1-ene to ethylene was 48 mol/kmol and the polymer production rate was 26 kg/h. The production split was thus 49/51. No hex-1-ene was introduced into the gas phase reactor.

The polymer collected from the gas phase reactor was stabilised by adding to the powder 400 ppm Irganox B561. The stabilised polymer was then extruded and pelletised under nitrogen atmosphere with a CIM90P extruder, manufactured by Japan Steel Works. The melt temperature was 200°C, throughput 280 kg/h and the specific energy input (SEI) was 200 kWh/t.

The production split between the loop and gas phase reactors was thus 49/51. The polymer pellets had a melt index $MFR_2$ of 10 g/10 min, a density of 916 kg/m$^3$, a but-1-ene content of 8.1 % by weight, a weight average molecular weight $M_w$ of 67800 g/mol, a number average molecular weight $M_n$ of 19600 g/mol and a z- average molecular weight $M_z$ of 140000 g/mol. Further, the polymer had a zero shear rate viscosity $\eta_0$ of 800 Pa.s, a shear thinning index $SHI_{0/100}$ of 2.4.

**Example 15:**

The polymer powder produced in Example 4 was dry blended with CA8200 and Irganox B561 so that the amount of CA8200 was 15% by weight and the amount of Irganox B561 was 400 ppm of the total composition. The resulting blend was extruded and pelletised under nitrogen atmosphere using Berstorff BZE40A extruder so that the throughput was 40 kg/h and melt temperature 195°C.

**Example 16:**

Extrusion coating runs were made on Beloit coextrusion coating line. It had a Peter Cloeren's die and a five layer feed block. The width of the line was 850 - 1000 mm and the maximum line speed was 1000 m/min (design value).

In the coating line above a UG kraft paper having a basis weight of 70 g/m$^2$ was coated with a layer of CA8200 having a basis weight of 6 g/m$^2$ and a layer of inventive polymer composition prepared in Examples 1 to 9 having a basis weight of 26 g/m$^2$. The temperature of the polymer melt was set to 300°C. The line speed was 100 m/min.

**Example 17:**

Extrusion coating runs were made according to Example 16, except that monolayer coatings were produced at different line speeds. The highest line speed showing a stable behaviour was reported.

Monolayer coatings were made from the materials so that the basis weight was 10 g/m$^2$. The data is shown in Table 3.

Table 3:

| Product of Example | Maxrpm | Max line speed DD (mono) m/min | Coating weight (mono) g/m$^2$ |
|---|---|---|---|
| 3 | 243 | no | no |
| 4 | 199 | no | no |
| 5 | 212 | >500 | 10,1-11,3 |
| C.E.1 | 127 | >500 | |
| C.E.2 | >250 | >500 | |
| 6 | 240 | >500 | 10,0-10,5 |
| 7 | 137 | >500 | 10,0-11,0 |
| 8 | 116 | no | no |
| 9 | 131 | >500 | 9,2-10.9 |
| 10 | 127 | >500 | 10,2-12,0 |
| 11 | 145 | >500 | 10,9-12,4 |
| 12 | 164 | 500 | 10.3-11.0 |
| 13 | 219 | >500 | 10.5-11.9 |
| 14 | 204 | >500 | 10.8-11.9 |
| "no" means that at line speed of more than 400 m/min the behaviour was so unstable that the coating could not be analysed. N.D. indicates that the property was not determined for the respective sample. | | | |

The column maxrpm indicates the maximum RPM value of the extruder motor when preparing the coating. The higher the value, the better is the processability and the higher is the throughput of the polymer.

The column max line speed indicates the maximum line speed of the web in m/min. A low maximum line speed indicates that the resin has a tendency to undergo draw resonance, where the polymer flow from the die starts to oscillate heavily and causes the coating to become uneven. The higher the value, the better is the performance of the polymer on the coating line and the production rate of coating is higher.

The column coating weight shows the measured coating weight and the range where it varied. The conditions were not optimised to minimise the variation.

**Example 18:**

The coatings produced in Example 16 were put to a hot tack test to measure the sealability. The sample (coated side against coated side) was folded and pressed together at an elevated temperature. The sealing time was 0.5 seconds, the lag time was 0.2 seconds and the sealing pressure was 1.5 N/mm$^2$ for a specimen width of 15 mm. The force to break the seal was then measured. The data is shown in the attached figure.

**Discussion:**

From the Examples and Comparative Examples it can be seen that:

- the polymer of Comparative Example 1 has extremely good sealing properties; however, it has a poor processability as indicated by the low maximum RPM value in Table 3
- the polymer of Comparative Example 2 has poor sealing properties; however, it has extremely good processability
- the polymers of the Examples 1 to 14 have a combination between good sealing properties and processability.

## Claims

**1.** An extrusion coated substrate having a coating comprising a multimodal polyethylene produced by polymerization catalysed by a single site catalyst and comprising as comonomers to ethylene at least two different $C_{4-12}$ alpha olefins.

**2.** An extrusion coated substrate as claimed in claim 1 wherein said polyethylene comprises as comonomers to ethylene at least two alpha olefins selected from but-1-ene, hex-1-ene, 4-methyl-pent-1-ene, hept-1-ene, oct-1-ene, and dec-1-ene.

**3.** An extrusion coated substrate as claimed in claim 2 wherein said polyethylene comprises an ethylene butene copolymer and an ethylene hexene copolymer.

**4.** An extrusion coated substrate as claimed in claim 1 wherein said polyethylene comprises a bimodal terpolymer comprising

a) a lower molecular weight copolymer of ethylene and but-1-ene
b) a higher molecular weight copolymer of ethylene and a $C_5$ to $C_{12}$ alpha-olefin,

**5.** An extrusion coated substrate as claimed in claim 1 wherein said polyethylene comprises a bimodal polymer comprising

a) a lower molecular weight polymer which is a binary copolymer of ethylene and a $C_4$ to $C_{12}$ alpha-olefin and
b) a higher molecular weight polymer which is either a binary copolymer of ethylene and but-1-ene, if the lower molecular weight polymer of a) is a binary copolymer of ethylene and a $C_5$ to $C_{12}$ alpha-olefin, or a terpolymer of ethylene, but-1-ene and a $C_5$ to $C_{12}$ alpha-olefin.

**6.** An extrusion coated substrate as claimed in claim 1 to 5 wherein said polyethylene has an MWD 3 to 6, an $MFR_2$ of 5 to 20 g/10min and a density of 905 to 930 kg/$m^3$.

**7.** An extrusion coated substrate as claimed in claim 1 to 6 wherein said polyethylene has a heat sealing force which varies by less than 2N/25.4 mm over a temperature range of at least 30°C.

**8.** An extrusion coated substrate as claimed in claim 1 to 7 wherein said coating comprises LDPE.

**9.** An extrusion coated substrate as claimed in claim 8 wherein LDPE forms 15 to 35 wt% of the coating.

**10.** An extrusion coated substrate as claimed in claim 1 to 9 comprising multiple coating layers.

**11.** An extrusion coated substrate as claimed in claim 1 to 10 wherein said substrate is paper, cardboard, a polyester film, cellophane, polyamide film, polypropylene film, oriented polypropylene film or aluminium foil.

**12.** The use of a multimodal polyethylene produced by polymerization catalysed by a single site catalyst and comprising as comonomers to ethylene at least two different $C_{4-12}$ alpha olefins in extrusion coating or for the formation of cast films.

**13.** A process for extrusion coating a substrate comprising extruding a multimodal polyethylene produced by polymerization catalysed by a single site catalyst and which comprises as comonomers to ethylene at least two different $C_{4-12}$ alpha olefins to form a polymer melt and coating a substrate with said melt.

**14.** A process as claimed in claim 13 wherein said polyethylene is produced in a two-stage process comprising a loop reactor followed by a gas phase reactor.

**15.** A process as claimed in claim 13 or 14 wherein said polyethylene is blended with LDPE prior to extrusion.

## Patentansprüche

**1.** Durch Extrusion beschichtetes Substrat mit einer Beschichtung, die ein multimodales Polyethylen umfaßt, das durch

Polymerisation erzeugt worden ist, die von einem Katalysator mit einheitlichen aktiven Zentren katalysiert worden ist, und das als Comonomere zum Ethylen mindestens zwei unterschiedliche $C_{4-12}$-α-Olefine umfaßt.

**2.** Durch Extrusion beschichtetes Substrat nach Anspruch 1, wobei das Polyethylen als Comonomere zum Ethylen zumindest zwei α-Olefine umfaßt, die aus Buten-1, Hexen-1, 4-Methylpenten-1, Hepten-1, Octen-1 und Decen-1 ausgewählt sind.

**3.** Durch Extrusion beschichtetes Substrat nach Anspruch 2, wobei das Polyethylen ein Ethylen-Buten-Copolymer und ein Ethylen-Hexen-Copolymer umfaßt.

**4.** Durch Extrusion beschichtetes Substrat nach Anspruch 1, wobei das Polyethylen ein bimodales Terpolymer umfaßt, welches umfaßt:

a) ein Copolymer mit geringerem Molekulargewicht von Ethylen und Buten-1,
b) ein Copolymer mit höherem Molekulargewicht von Ethylen und einem $C_5$-$C_{12}$-α-Olefin.

**5.** Durch Extrusion beschichtetes Substrat nach Anspruch 1, wobei das Polyethylen ein bimodales Polymer umfaßt, welches umfaßt:

a) ein Polymer mit geringerem Molekulargewicht, das ein binäres Copolymer von Ethylen und einem $C_4$-$C_{12}$-α-Olefin ist, und
b) ein Polymer mit höherem Molekulargewicht, das entweder ein binäres Copolymer von Ethylen und Buten-1 ist, wenn das Polymer mit geringerem Molekulargewicht von a) ein binäres Copolymer von Ethylen und einem $C_5$-$C_{12}$-α-Olefin ist, oder ein Terpolymer von Ethylen, Buten-1 und einem $C_5$-$C_{12}$-α-Olefin ist.

**6.** Durch Extrusion beschichtetes Substrat nach Anspruch 1 bis 5, wobei das Polyethylen eine MWD von 3 bis 6, eine $MFR_2$ von 5 bis 20 g/10 min und eine Dichte von 905 bis 930 $kg/m^3$ hat.

**7.** Durch Extrusion beschichtetes Substrat nach Anspruch 1 bis 6, wobei das Polyethylen eine Heißsiegelkraft hat, die innerhalb eines Temperaturbereichs von mindestens 30°C um weniger als 2 N/25,4mm variiert.

**8.** Durch Extrusion beschichtetes Substrat nach Anspruch 1 bis 7, wobei die Beschichtung LDPE umfaßt.

**9.** Durch Extrusion beschichtetes Substrat nach Anspruch 8, wobei das LDPE 15 bis 35 Gew.-% der Beschichtung bildet.

**10.** Durch Extrusion beschichtetes Substrat nach Anspruch 1 bis 9, das mehrere Überzugsschichten umfaßt.

**11.** Durch Extrusion beschichtetes Substrat nach Anspruch 1 bis 10, wobei das Substrat Papier, Pappe, eine Polyesterfolie, Cellophan, eine Polyamidfolie, eine Polypropylenfolie, eine orientierte Polypropylenfolie oder eine Aluminiumfolie ist.

**12.** Verwendung eines multimodalen Polyethylens, das durch Polymerisation erzeugt worden ist, die von einem Katalysator mit einheitlichen aktiven Zentren katalysiert worden ist, und das als Comonomere zum Ethylen zumindest zwei unterschiedliche $C_{4-12}$-α-Olefine umfaßt, beim Extrusionsbeschichten oder bei der Herstellung von Gießfolien.

**13.** Verfahren zum Extrusionsbeschichten eines Substrats, umfassend das Extrudieren eines multimodalen Polyethylens, das durch Polymerisation erzeugt worden ist, die von einem Katalysator mit einheitlichen aktiven Zentren katalysiert worden ist, und das als Comonomere zum Ethylen zumindest zwei unterschiedliche $C_{4-12}$-α-Olefine umfaßt, wodurch eine Polymerschmelze erzeugt wird, und das Beschichten eines Substrats mit dieser Schmelze.

**14.** Verfahren nach Anspruch 13, wobei das Polyethylen in einem zweistufigen Verfahren erzeugt wird, das einen Reaktor mit geschlossenem Kreis gefolgt von einem Gasphasenreaktor umfaßt.

**15.** Verfahren nach Anspruch 13 oder 14, wobei das Polyethylen vor der Extrusion mit LDPE gemischt wird.

## Revendications

1. Substrat enduit par extrusion ayant un revêtement comprenant un polyéthylène multimodal produit par polymérisation catalysée par un catalyseur à site unique et comprenant sous la forme de comonomères à l'éthylène au moins deux alpha oléfines en $C_4$ à $C_{12}$ différentes.

2. Substrat enduit par extrusion selon la revendication 1 dans lequel ledit polyéthylène comprend sous la forme de comonomères à l'éthylène au moins deux alpha oléfines choisies parmi but-1-ène, hex-1-ène, 4-méthyl-pent-1-ène, hept-1-ène, oct-1-ène et dec-1-ène.

3. Substrat enduit par extrusion selon la revendication 2 dans lequel ledit polyéthylène comprend un copolymère d'éthylène et de butène et un copolymère d'éthylène et d'hexène.

4. Substrat enduit par extrusion selon la revendication 1 dans lequel ledit polyéthylène comprend un terpolymère bimodal comprenant

   a) un copolymère de poids moléculaire plus faible d'éthylène et de but-1-ène
   b) un copolymère de poids moléculaire plus élevé d'éthylène et d'alpha-oléfine en $C_5$ à $C_{12}$.

5. Substrat enduit par extrusion selon la revendication 1 dans lequel ledit polyéthylène comprend un polymère bimodal comprenant

   a) un polymère de poids moléculaire plus faible qui est un copolymère binaire d'éthylène et d'une alpha-oléfine en $C_6$ à $C_{12}$ et
   b) un polymère de poids moléculaire plus élevé qui est soit un copolymère binaire d'éthylène et de but-1-ène, si le polymère de poids moléculaire plus faible de a) est un copolymère binaire d'éthylène et d'une alpha-oléfine en $C_5$ à $C_{12}$, ou un terpolymère d'éthylène, de but-1-ène et d'une alpha-oléfine en $C_5$ à $C_{12}$.

6. Substrat enduit par extrusion selon l'une quelconque des revendications 1 à 5 dans lequel ledit polyéthylène présente un $MWD_3$ de 3 à 6, un $MFR_2$ de 5 à 20 g/10 min et une densité de 905 à 930 kg/m$^3$.

7. Substrat enduit par extrusion selon l'une quelconque des revendications 1 à 6 dans lequel ledit polyéthylène présente une force de scellement thermique qui varie par moins de 2 N/25,4 mm dans une plage de température d'au moins 30°C.

8. Substrat enduit par extrusion selon l'une quelconque des revendications 1 à 7 dans lequel ledit revêtement comprend du LDPE.

9. Substrat enduit par extrusion selon la revendication 8 dans lequel le LDPE constitue de 15 à 35 % en poids du revêtement.

10. Substrat enduit par extrusion selon l'une quelconque des revendications 1 à 9 comprenant plusieurs couches de revêtement.

11. Substrat enduit par extrusion selon l'une quelconque des revendications 1 à 10 dans lequel ledit substrat est du papier, du carton, un film de polyester, de la cellophane, un film de polyamide, un film de polypropylène, un film de polypropylène orienté ou une feuille d'aluminium.

12. Utilisation d'un polyéthylène multimodal produit par polymérisation catalysée par un catalyseur à site unique et comprenant sous la forme de comonomères à l'éthylène au moins deux alpha-oléfines en $C_4$ à $C_{12}$ différentes dans un revêtement par extrusion ou pour la formation de film coulé.

13. Procédé pour revêtement par extrusion d'un substrat comprenant un polyéthylène multimodal produit par polymérisation catalysée par un catalyseur à site unique et qui comprend sous la forme de comonomères à l'éthylène au moins deux alpha-oléfines en $C_4$ à $C_{12}$ pour former une coulée de polymère et pour revêtement d'un substrat avec ladite coulée.

14. Procédé selon la revendication 13 dans lequel ledit polyéthylène est produit dans un procédé à deux étapes comprenant un réacteur à boucle suivi d'un réacteur en phase gazeuse.

**15.** Procédé selon la revendication 13 ou 14 dans lequel ledit polyéthylène est mélangé avec du LDPE avant l'extrusion.

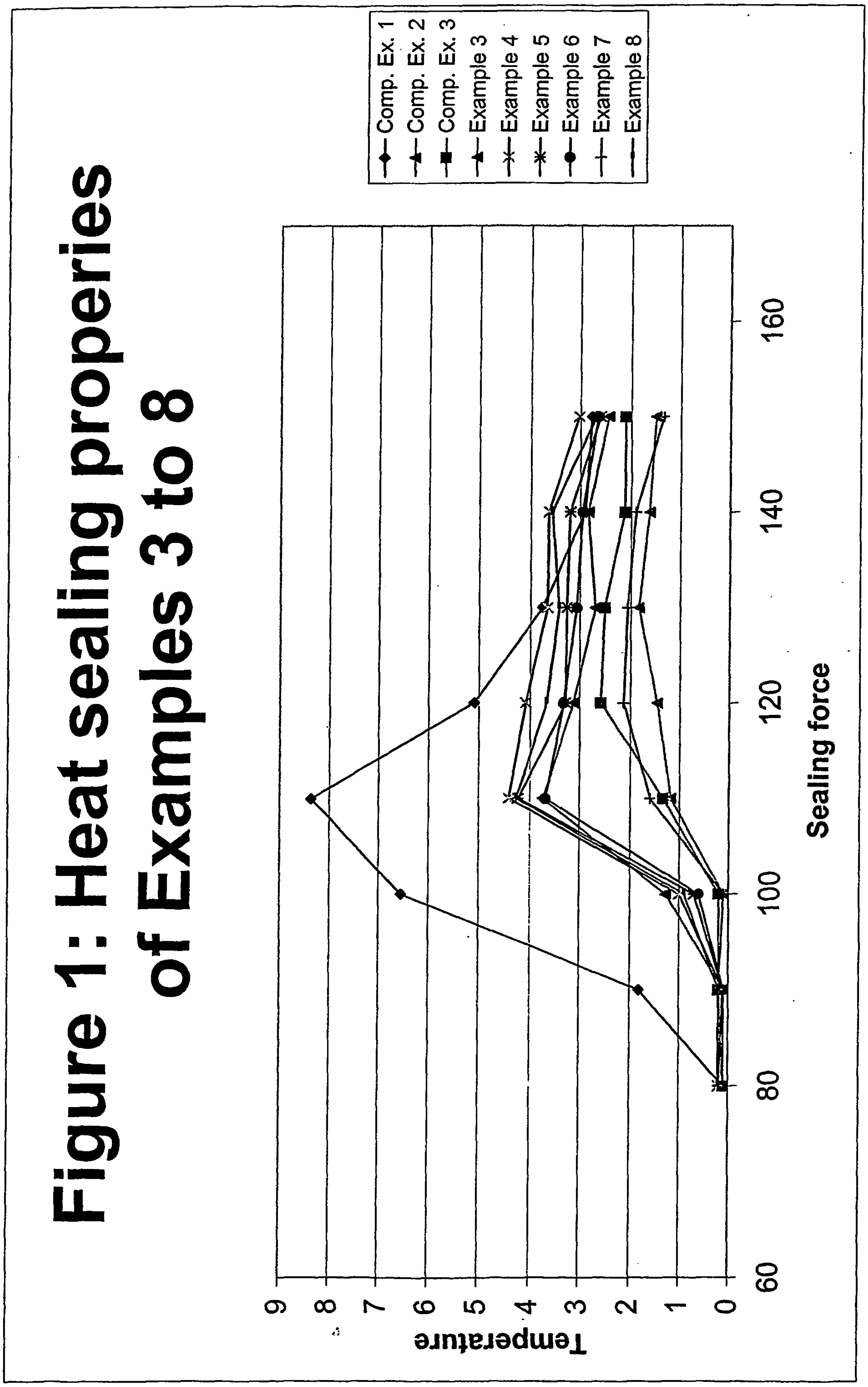


Figure 1: Heat sealing properies of Examples 3 to 8

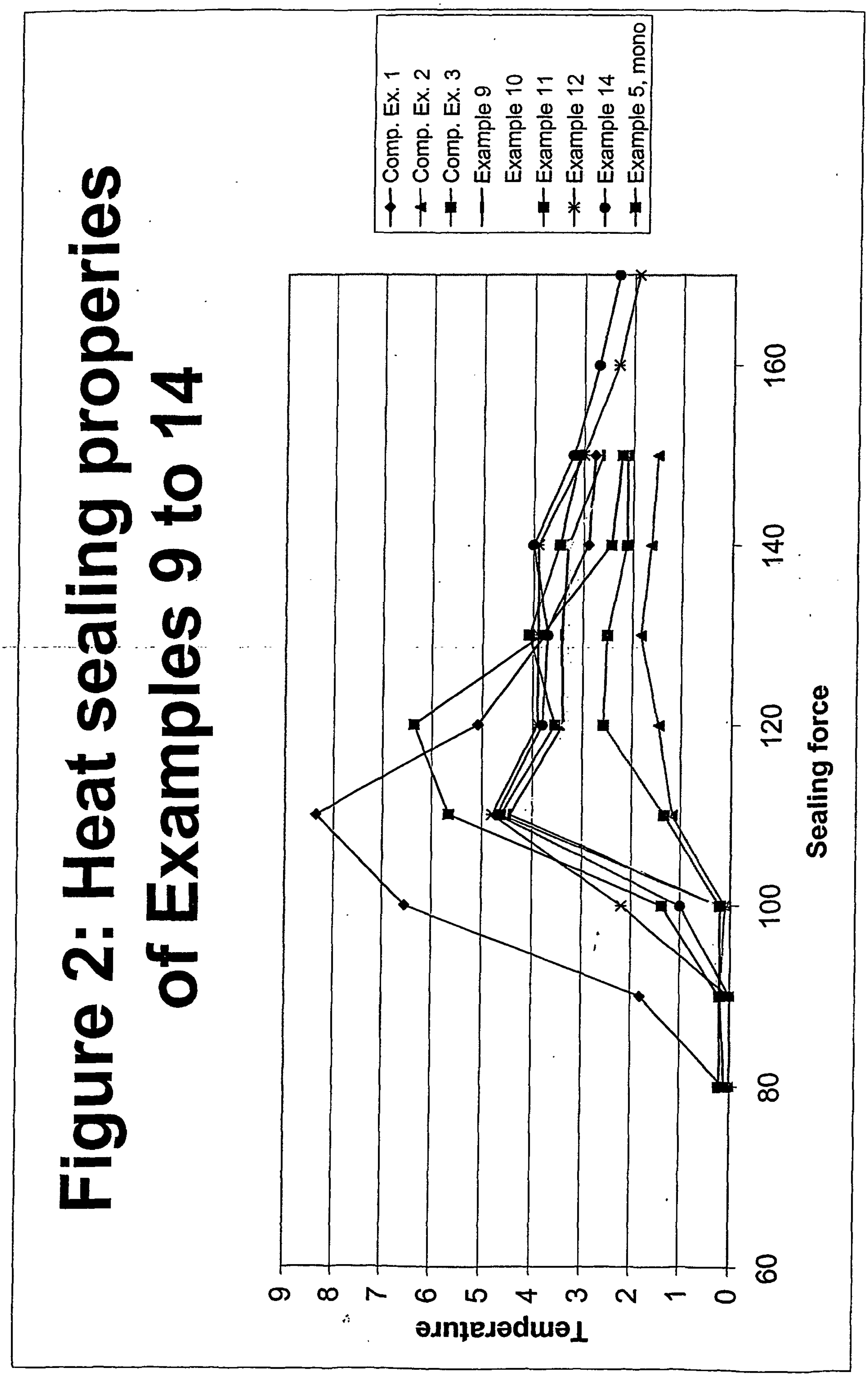


Figure 2: Heat sealing properies of Examples 9 to 14